(19) **Europäisches Patentamt**

**European Patent Office**

**Office européen des brevets**

(11) **EP 1 164 067 B1**

(12) **EUROPÄISCHE PATENTSCHRIFT**

(45) Veröffentlichungstag und Bekanntmachung des Hinweises auf die Patenterteilung:
**27.10.2004 Patentblatt 2004/44**

(51) Int Cl.$^7$: **B60T 17/22**

(21) Anmeldenummer: **01250208.4**

(22) Anmeldetag: **12.06.2001**

(54) **Alarmeinrichtung für eine druckluftgesteuerte Bremsanlage eines Fahrzeugs**

Alarm system for a compressed-air braking system of a vehicle

Système d'alarme pour une installation de freinage à air comprimé d'un véhicule

(84) Benannte Vertragsstaaten:
**AT CH FR IT LI**

(30) Priorität: **14.06.2000 DE 10029125**

(43) Veröffentlichungstag der Anmeldung:
**19.12.2001 Patentblatt 2001/51**

(73) Patentinhaber: **SIEMENS AKTIENGESELLSCHAFT**
**80333 München (DE)**

(72) Erfinder:
• **Talke, Wolfgang, Dr.**
**38889 Blankenburg (DE)**
• **Wiemers, Thomas, Dr.**
**81249 München (DE)**

(56) Entgegenhaltungen:
**EP-A- 0 278 928          EP-A- 0 477 519**
**EP-A- 0 535 392          DE-A- 4 013 278**

**Beschreibung**

Die Erfindung betrifft eine Alarmeinrichtung für eine druckluftgesteuerte Bremsanlage eines Fahrzeugs.

Aus der EP 0 477 519 A1 ist ein Bremssystem für ein Fahrzeug bekannt, das bei einer Fehlfunktion der druckluftgesteuerten Bremsanlage ein Alarmsignal erzeugt. Dazu wird der Druck in der Bremsanlage mittels Drucksensoren gemessen und mit in einem elektronischen Steuergerät vorliegenden Druckwerten verglichen. Das Steuergerät ist mit einer Anzeige am Armaturenbrett des Fahrzeugs verbunden, so dass es ein erzeugtes Alarmsignal mittels einer Warnlampe ausgeben kann. Überschreitet beispielsweise der Druckabfall einen vorgegebenen im Steuergerät einprogrammierten Grenzwert, so wird die Warnlampe vom Steuergerät eingeschaltet und eine Fehlfunktion der Bremsanlage signalisiert.

Nachteilig ist dabei, dass die Zuverlässigkeit der Erkennung einer Fehlfunktion nicht immer ausreichend ist.

Die EP 0 278 928 A1 beschreibt ein System zur Steuerung und Kontrolle der automatischen Bremsen von Eisenbahnwagen. Das pneumatische System verfügt über eine Hauptleitung und eine Einrichtung, mittels derer die Versorgung und Entlüftung der Hauptleitung unter Verwendung eines Steuerungshebels eingestellt wird. Die Einrichtung umfasst Ventile und einen Druckgeber, der mit einer elektronischen Einheit verbunden ist, welche die Einrichtung durch Vergleich der Signale des Druckgebers mit vorgegebenen Referenzsignalen steuert. Mittels mit der Steuerungseinheit verbundenen Leuchtanzeigen werden Druckabfälle in der Hauptleitung angezeigt.

Weiter ist aus der DE 40 13 278 A1 eine elektronische Bremssteuerung bekannt, die mit elektronischen Mitteln pneumatische Druckverläufe einer Bremsanlage, insbesondere die der Hauptleitung eines Zuges, nachbildet. Zu den Druckverläufen gehört auch der Druck in den einzelnen Bremszylindern. Beim Lösen des Zuges werden aus den Modellgrößen und den tatsächlich nachgespeisten Luftvolumen Werte ermittelt, die ein schnelleres Lösen der Bremse ermöglichen. Dazu wird mit elektronischen Mitteln ein Zug nachgebildet, wobei aus Messgrößen Signale erzeugt werden, die den zeitlichen Verlauf der beim Lösen gewünschten Drucküberhöhung bestimmen. Anhand der Simulation des Zuges wird ein Wert ermittelt, der jeweils ein Maß für das noch in die Hauptleitung nachzufüllende Luftvolumen angibt.

Ferner offenbart die EP 0 535 392 A2 ein Verfahren zur Diagnose einer elektronisch geregelten Druckmittel-Bremseinrichtung eines Fahrzeugs. Dabei wird in einem definierten Betriebszustand des Fahrzeugs ein Testzyklus gestartet, um die Funktion des Bremskreises zu überprüfen. Dies ermöglicht insbesondere die redundanten Nebenbremskreise einer ständigen Kontrolle zu unterziehen, da diese im normalen Fahrbetrieb bei intakten Hauptbremskreisen nicht verwendet werden.

Der Erfindung liegt die Aufgabe zugrunde, eine Einrichtung anzugeben, mit der eine Fehlfunktion einer druckluftgesteuerten Bremsanlage zuverlässig erkannt werden kann.

Diese Aufgabe wird erfindungsgemäß gelöst durch eine Einrichtung zum Erzeugen eines Alarmsignals, das eine Fehlfunktion einer druckluftgesteuerten Bremsanlage eines Fahrzeugs angibt, mit einer Messeinrichtung, die den Druck und/oder den Luftstrom der Druckluft in der Bremsanlage unter Bildung von Druck- und/oder Luftstrommesswerten misst, mit einer Speichereinrichtung zum Abspeichern von betriebsartindividuellen Solldruck- und/oder Sollstromverläufen und mit einer mit der Messeinrichtung und der Speichereinrichtung verbundenen Steuereinrichtung, die die Messwerte der Messeinrichtung mit den Solldruck- und/oder Sollstromverläufen der Speichereinrichtung vergleicht und bei anormalen Druck- und/oder Luftstrommesswerten das Alarmsignal erzeugt, wobei die Steuereinrichtung derart ausgestaltet ist, dass sie aus dem zeitlichen Verlauf der Druck- und/oder Luftstrommesswerte und der betriebsartindividuellen Solldruck- und/oder Sollstromverläufe eine Kreuzkorrelationsfunktion bildet, einen Maximalwert dieser Kreuzkorrelationsfunktion bestimmt, den Maximalwert als eine Korrelationsmessgröße behandelt und das Alarmsignal erzeugt, wenn die Korrelationsmessgröße einen vorgegebenen Schwellenwert unterschreitet. Unter dem Begriff "Fahrzeug" werden dabei sowohl Einzelfahrzeuge als auch aus mehreren Einzelfahrzeugen bestehende Wagenverbünde oder Züge, insbesondere Eisenbahnzüge verstanden.

Ein wesentlicher Vorteil der erfindungsgemäßen Einrichtung besteht darin, dass Fehlfunktionen der Bremsanlage sehr zuverlässig erkannt werden können, weil nämlich zum Erzeugen des Alarmsignals betriebsartindividuelle Solldruck- und/oder Sollstromverläufe herangezogen werden. Durch die Verwendung betriebsartindividueller Solldruck- und/oder Sollstromverläufe ist es nämlich möglich, bereits sehr frühzeitig einen Fehler in der Bremsanlage festzustellen, und zwar noch lange, bevor ein Überschreiten von Maximal-Grenzwerten bzw. ein Totalausfall der Bremsanlage auftritt. Die betriebsartindividuelle Überwachung der Bremsanlage ermöglicht es nämlich - im Unterschied beispielsweise zu einer Überwachung, bei der lediglich das Einhalten von pauschal vorgegebenen Grenzwerten von Druck oder Luftstrom in der Bremsanlage kontrolliert wird - der jeweiligen Betriebsart der Bremsanlage (z. B. "Bremsen", Lösen der Bremse", "Füllen der Bremsanlage mit Druckluft", usw.) Rechnung zu tragen; so ist beispielsweise beim "Lösen der Bremse" ein völlig anderer Sollverlauf von Druck und Luftstrom in der Bremsanlage zu erwarten als beim "Bremsen", so dass unter Berücksichtigung der jeweiligen Betriebsart eine sehr viel genauere Überwachung der Bremsanlage möglich ist als bei einer betriebsartunabhängigen, quasi "pauschalen" Überwachung. Durch die betriebsartindividuelle Überwachung können damit bereits sehr geringe Abweichungen der Bremsanlage vom "Normalzustand" festgestellt werden, so dass eine sehr große Zuverlässigkeit beim Detektieren von Fehlfunktionen erreicht werden kann. Bei der erfindungsgemäßen Einrichtung ist es damit auch möglich, sich "anbahnende" Fehlfunktionen zu entdecken, also solche, die zwar noch innerhalb der Toleranzgrenzen für den Betrieb der Bremsanlage liegen, aber schon auf eine deutliche Abnutzung der Bremsanlage oder Teilen davon hindeuten.

Um Fehlfunktionen besonders zuverlässig erkennen zu können, ist vorgeschlagen, dass die Steuereinrichtung derart ausgestaltet ist, dass sie aus dem zeitlichen Verlauf der Druck- und/oder Luftstrommesswerte und der betriebsartindividuellen Solldruck- und/oder Sollstromverläufe eine Korrelationsmessgröße bestimmt und das Alarmsignal erzeugt, wenn die Korrelationsmessgröße einen vorgegebenen Schwellenwert unterschreitet; denn mit Korrelationsmessgrößen lassen sich Abweichungen sehr genau feststellen.

Eine sehr einfache Bestimmung der Korrelationsmessgröße ist erfindungsgemäß möglich durch das Berechnen von Kreuzkorrelationsfunktionen; es wird daher als vorteilhaft angesehen, wenn die Steuereinrichtung derart ausgestaltet ist, dass sie aus dem zeitlichen Verlauf der Druck- und/oder Luftstrommesswerte und der betriebsartindividuellen Solldruck- und/oder Sollstromverläufe eine Kreuzkorrelationsfunktion bildet, einen Maximalwert dieser Kreuzkorrelationsfunktion bestimmt und den Maximalwert als Korrelationsmessgröße behandelt.

Noch genauer als mit betriebsartindividuellen Solldruck- und/oder Sollstromverläufen lässt sich erfindungsgemäß das Alarmsignal erzeugen, wenn fahrzeug- und betriebsartindividuelle Solldruck- und/oder Sollstromverläufe herangezogen werden; konkret wird also erfindungsgemäß vorgeschlagen, dass die Steuereinrichtung derart ausgestaltet ist, dass sie bei einer zuvor an dem Fahrzeug durchgeführten Bremsprobe von der Messeinrichtung gemessene Druck- und/oder Luftstrommesswerte als fahrzeug- und betriebsartindividuelle Solldruck- und/oder Sollstromverläufe in der Speichereinrichtung abspeichert. Die fahrzeug- und betriebsartindividuellen Solldruck- und/oder Sollstromverläufe stellen also eine Art "Fingerabdruck" der Bremsanlage dar, weil nämlich die bei der Bremsprobe gemessenen fahrzeug- und betriebsartindividuellen Solldruck- und/oder Sollstromverläufe ganz charakteristisch sind für die Bremsanlage des Fahrzeugs. Jede Änderung dieses "Fingerabdrucks", beispielsweise durch einen Verschleiß von Bremseinrichtungen der Bremsanlage, führt zu einer Änderung dieses "Fingerabdrucks", die auf eine Fehlfunktion oder auf eine in Kürze zu erwartende Fehlfunktion hindeutet. Die Art der Änderung des Fingerabdrucks lässt dabei auch Rückschlüsse darauf zu, welche Teile der Bremsanlage defekt oder verschlissen sind. Speichert man nämlich die gemessenen "Fingerabdruck-Änderungen" nach der Fehlerbehebung in einer Datenbank ab, so kann durch Vergleich neu gemessener "Fingerabdruck-Änderungen" mit früher gemessenen, abgespeicherten "Fingerabdruck-Änderungen" bereits noch während des Betriebs der Bremsanlage eine Fehlerdiagnose durchgeführt werden. Dieses Ergebnis kann beispielsweise in der Speichereinrichtung abgespeichert werden und bei der nächsten Wartung der Bremsanlage von den Service-Technikern über ein Diagnosekabel abgefragt werden.

Besonders zuverlässig lässt sich das Alarmsignal bilden, wenn fahrzeug- und betriebsartindividuelle Solldruck- und/oder Sollstromverläufe ermittelt und abspeichert für die Betriebsarten "Bremsen des Zuges", "Lösen der Bremsen" und "Füllen der Bremsanlage mit Druckluft"; es wird also erfindungsgemäß als vorteilhaft angesehen, wenn die Steuereinrichtung derart ausgestaltet ist, dass sie die fahrzeug- und betriebsartindividuellen Solldruck- und/oder Sollstromverläufe ermittelt und abspeichert für die Betriebsarten des Fahrzeugs:

- Betriebsart "Bremsen des Fahrzeugs ", in der das Fahrzeug gebremst wird,
- Betriebsart "Lösen der Bremsen", in der die Bremsen nach Abschluss eines Bremsvorganges wieder gelöst werden und
- Betriebsart "Füllen der Bremsanlage mit Druckluft", in der die Bremsanlage mit Druckluft gefüllt oder nachgefüllt wird, und

die Steuereinrichtung darüber hinaus derart ausgestaltet ist, dass sie zum Erzeugen des Alarmsignals ausschließlich diejenigen fahrzeug- und betriebsartindividuellen Solldruck und/oder Sollstromverläufe heranzieht, die der jeweiligen Betriebsart des Fahrzeugs entsprechen.

Der Erfindung liegt außerdem die Aufgabe zugrunde, ein Verfahren anzugeben, mit der eine Fehlfunktion einer druckluftgesteuerten Bremsanlage zuverlässig erkannt werden kann.

Diese Aufgabe wird erfindungsgemäß gelöst durch ein Verfahren zum Erzeugen eines Alarmsignals, das eine Fehlfunktion einer druckluftgesteuerten Bremsanlage eines Fahrzeugs angibt, bei dem der Druck und/oder der Luftstrom in der Bremsanlage des Fahrzeugs unter Bildung von Druck- und/oder Luftstrommesswerten gemessen wird, die gemessenen Druck- und/oder Luftstrommesswerte mit betriebsartindividuellen Solldruck- und/oder Sollstromverläufen verglichen werden und bei anormalen Druckund/oder Luftstrommesswerten das Alarmsignal erzeugt wird, aus dem zeitlichen Verlauf der Druck- und/oder Luftstrommess- werte und der betriebsartindividuellen Solldruckund/oder Sollstromverläufe eine Kreuzkorrelationsfunktion gebildet wird, ein Maximalwert dieser Kreuzkorrelationsfunktion bestimmt wird, der Maximalwert als eine Korrelationsmessgröße behandelt wird und das Alarmsignal erzeugt wird, wenn die Korrelationsmessgröße einen vorgegebenen Schwellenwert unterschreitet.

Die Vorteile des erfindungsgemäßen Verfahrens und der in den Unteransprüchen beschriebenen vorteilhaften Ausgestaltungen des erfindungsgemäßen Verfahrens entsprechen den Vorteilen, die im Zusammenhang mit der erfindungsgemäßen Einrichtung und deren vorteilhaften Ausgestaltungen erläutert worden sind.

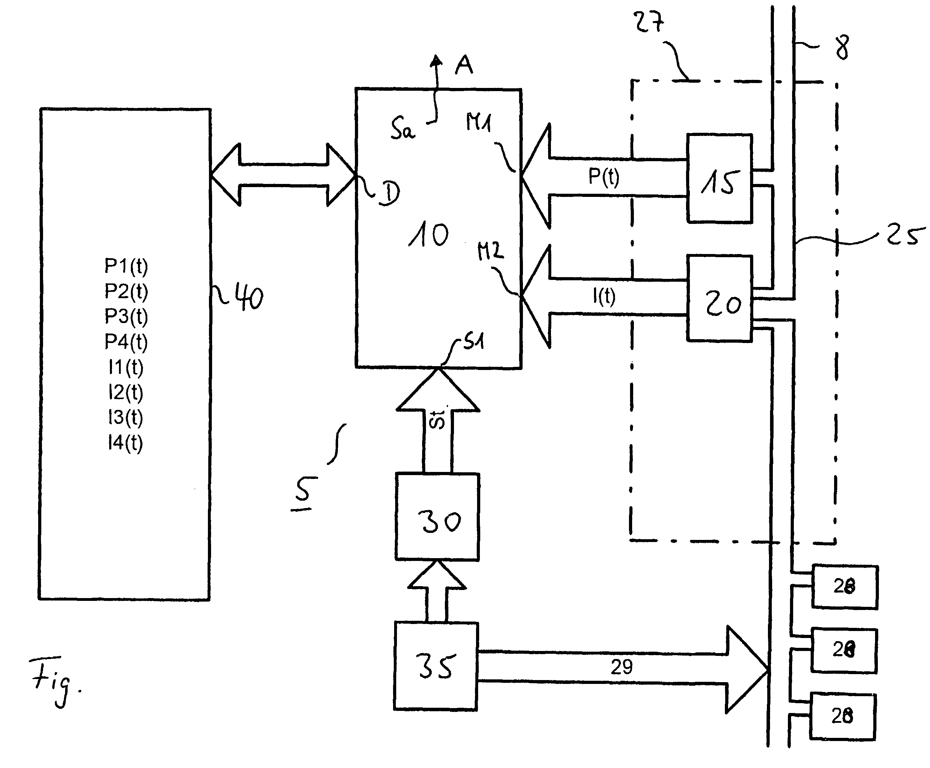

Zur Erläuterung zeigt die Figur 1 ein Ausführungsbeispiel für eine erfindungsgemäße Einrichtung, mit der auch das erfindungsgemäße Verfahren durchgeführt werden kann.

Die Figur 1 zeigt eine Einrichtung 5 zum Erzeugen eines Alarmsignals A, das eine Fehlfunktion einer druckluftgesteuerten Bremsanlage 8 eines in der Figur 1 nicht dargestellten, aus einer Antriebslokomotive und mehreren Waggons bestehenden Eisenbahnzuges angibt. Die Einrichtung 5 weist eine Steuereinrichtung 10 auf, der an einem Meßwerteingang M1 ein Drucksensor 15 und an einem weiteren Meßwerteingang M2 ein Luftstromsensor 20 vorgeordnet ist. Der Drucksensor 15 und der Luftstromsensor 20 sind an eine durch den Eisenbahnzug durchgeführte und alle Wagen des Eisenbahnzugs verbindende Bremshauptluftleitung 25 angeschlossen; die beiden Sensoren 15 und 20 bilden damit eine Messeinrichtung 27 zum Messen von Druck und Luftstrom in der Bremsanlage 8.

Die Figur 1 zeigt außerdem Bremseinrichtungen 28, die über die Bremshauptluftleitung 25 mit Druckluft beaufschlagt und angesteuert werden und mit denen der Eisenbahnzug gebremst wird.

Die Steuereinrichtung 10 ist mit einem Steuereingang S1 außerdem mit einer Erfassungseinrichtung 30 verbunden. Diese Erfassungseinrichtung 30 steht mit einer Bedieneinrichtung 35 in Verbindung, mit der die Bremsanlage 8 von einer Bedienperson - also dem Zugführer - bedient werden kann. Dies ist in der Figur 1 schematisch durch einen Pfeil 29 dargestellt. Bei der Bedieneinrichtung 35 kann es sich beispielsweise um ein Führerbremsventil im Führerstand des Eisenbahnzuges handeln. Die Erfassungseinrichtung 30 steht dabei mit der Bedieneinrichtung 35 derart in Verbindung, dass sie die jeweilige Schaltstellung der Bedieneinrichtung 35 - beispielsweise mittels elektrischer Kontakte - erfassen kann. Die Erfassungseinrichtung 30 gibt kontinuierlich ein die jeweilige Schaltstellung der Bedieneinrichtung 35 angebendes Steuersignal St an die Steuereinrichtung 10 ab.

Die Steuereinrichtung 10 ist darüber hinaus über einen Dateneingang D mit einer Speichereinrichtung 40 verbunden, in der fahrzeug- und betriebsartindividuelle Solldruck- und Sollstromwerte für die Bremsanlage 8 abspeicherbar sind.

Die Einrichtung 5 gemäß Figur 1 kann beispielsweise wie folgt betrieben werden. Zunächst wird mit dem Zug eine Bremsprobe durchgeführt, indem die folgenden Handlungen vorgenommen werden:

1. "Füllen der Bremsanlage 8 mit Druckluft":

Das Füllen der Bremsanlage 8 geschieht konkret durch Einfüllen von Druckluft mittels eines Luftpressers; dabei wird die Bremshauptluftleitung 25 und ein in der Figur nicht dargestellter Hilfsluftbehälter der Bremsanlage 8 unter Druckluft gesetzt. Dies erfordert eine entsprechende Bedienhandlung. Diese Bedienhandlung wird mit der Erfassungseinrichtung 35 erfasst und durch ein entsprechendes Steuersignals St an die Steuereinrichtung 10 signalisiert. Während des Füllens der Bremsanlage 8 werden mit dem Drucksensor 15 und dem Luftstromsensor 20 der Luftdruck und der Luftstrom in der Bremshauptluftleitung 25 unter Bildung von Luftdruckmesswerten $P(t)$ und Luftstrommesswerten $I(t)$ gemessen. Die Luftdruckmesswerte und Luftstrommesswerte gelangen von dem Drucksensor 15 bzw. dem Luftstromsensor 20 zur Steuereinrichtung 10, die den zeitlichen Verlauf der Luftdruckmesswerte $P(t)$ als ersten Solldruckverlauf $P1(t)$ und den zeitlichen Verlauf der Luftstrommesswerte $I(t)$ als ersten Sollstromverlauf $I1(t)$ in der Speichereinrichtung 40 abspeichert.

2. "Bremsen des Zugs":

Nachdem die Bremsanlage 8 mit Druckluft beaufschlagt ist, wird der Zug gebremst. Dies erfordert wiederum eine entsprechende Bedienhandlung, die mit der Erfassungseinrichtung 35 erfasst und durch ein entsprechendes Steuersignals St an die Steuereinrichtung 10 gemeldet wird. Sobald das entsprechende Steuersignal St für "Bremsen des Zugs" vorliegt, erfasst die Steuereinrichtung 10 die zeitlichen Verläufe von Druck und Luftstrom in der Bremshauptluftleitung 25 und speichert den zeitlichen Verlauf der gemessenen Luftdruckmesswerte $P(t)$ als zweiten Solldruckverlauf $P2(t)$ und den zeitlichen Verlauf Luftstrommesswerte $I(t)$ als zweiten Sollstromverlauf $I2(t)$ in der Speichereinrichtung 40 ab.

3. "Lösen der Bremse":

Beim Lösen der Bremsen der Bremsanlage 8 wird genauso vorgegangen wie oben beschrieben. Nachdem die Steuereinrichtung 10 mit der Erfassungseinrichtung 35 erfasst hat, dass die Betriebsart "Bremse lösen" durchgeführt wird, misst sie wiederum Druck und Luftstrom in der Bremshauptluftleitung 25 und speichert die zeitlichen Verläufe der gemessenen Luftdruckmesswerte $P(t)$ und der Luftstrommesswerte $I(t)$ in der Speichereinrichtung 40 ab, und zwar als dritten Solldruckverlauf $P3(t)$ und als dritten Sollstromverlauf $I3(t)$.

4. "Nachfüllen mit Druckluft":

Auch in der Betriebsart "Nachfüllen mit Druckluft" wird wie oben beschrieben vorgegangen. Nachdem die Steuereinrichtung mit der Erfassungseinrichtung 35 erfasst hat, dass die Betriebsart "Nachfüllen mit Druckluft" durchgeführt wird, misst sie wiederum Druck und Luftstrom in der Bremshauptluftleitung 25 und speichert die zeitlichen Verläufe der gemessenen Luftdruckmesswerte P(t) und Luftstrommesswerte I(t) als vierten Solldruckverlauf P4(t) und als vierten Sollstromverlauf I4(t) in der Speichereinrichtung 40 ab.

Wird bei der Bremsprobe festgestellt, dass die Bremsanlage 8 funktionstüchtig ist, so kann der Eisenbahnzug normal in Betrieb genommen werden. Die bei der Bremsprobe aufgenommenen Solldruck- und Sollstromverläufe werden dabei für den weiteren Betrieb des Zuges weiterverwendet, und zwar zur Kontrolle der Bremsanlage 8 und damit zur Kontrolle der einzelnen Bremseinrichtungen 28 der Bremsanlage 8; wie dies genau geschieht, soll nachfolgend im Detail erläutert werden. Zusammengefasst ist jedenfalls schon einmal festzuhalten, dass nach Abschluss der Bremsprobe Solldruckverläufe und Sollstromverläufe für die Betriebsarten "Füllen der Bremsanlage 8 mit Druckluft", "Bremsen des Zugs", "Lösen der Bremse" und "Nachfüllen mit Druckluft" in der Speichereinrichtung 40 vorliegen.

Nach Abschluss der Bremsprobe wird die Bremsanlage 8 in den "Normalbetrieb" geschaltet; dieser sieht wie folgt aus:

Die Steuereinrichtung 10 überwacht kontinuierlich das Steuersignal St auf eine Signaländerung. Wie die Steuereinrichtung 10 arbeitet, wenn es zu einer Signaländerung kommt, soll nun am Beispiel des Übergangs von "Bremse gelöst" zu "Bremsen des Zugs" beschrieben werden. Bei einem Wechsel des Steuersignals St prüft die Steuereinrichtung 10, ob für die neue Betriebsart ein Solldruckverlauf und ein Sollstromverlauf in der Speichereinrichtung 40 abgespeichert ist. Da - wie oben beschrieben - für die Betriebsart "Bremsen des Zugs" ein Solldruckverlauf und ein Sollstromverlauf abgespeichert wurde, nämlich der zweite Solldruckverlauf P2(t) und der zweite Sollstromverlauf I2(t), kann die Steuereinrichtung 10 Druck und Luftstrom in der Bremshauptluftleitung 25 mit der Messeinrichtung 27 messen und die Messwertverläufe mit den "Sollverläufen" vergleichen. Das Vergleichen wird dabei unter Bildung einer Korrelationsmessgröße für den Druck und einer Korrelationsmessgröße für den Luftstrom durchgeführt.

Hierzu werden zunächst Kreuzkorrelationsfunktionen Kp($\tau$) und Ki($\tau$)berechnet, die die Kreuzkorrelation zwischen dem Luftdruckmesswerte-Verlauf P(t) und dem Solldruckverlauf P2(t) einerseits und die Korrelation zwischen dem Luftstrommesswerte-Verlauf I(t) und dem Sollstromverlauf I2(t) andererseits angeben:

$$Kp(\tau) = \int_0^{\Delta t} P(t) \cdot P2(t-\tau)dt$$

und

$$Ki(\tau) = \int_0^{\Delta t} I(t) \cdot I2(t-\tau)dt$$

Anschließend wird der Maximalwert der Kreuzkorrelationsfunktionen Kp($\tau$) und Ki($\tau$)berechnet, und zwar für das Intervall $0 \leq \tau \leq \Delta t$. $\Delta t$ gibt die Länge des Messfensters an, für das die Sollverläufe P2(t) und I2(t) abgespeichert und die Druck- und Luftstrommesswerte P(t) und I(t) gemessen worden sind. Der Zeitpunkt t=0 soll dabei für alle Verläufe den Beginn des jeweiligen Messfensters bezeichnen:

$$Mp = \max(\int_0^{\Delta t} P(t) \cdot P2(t-\tau)dt)$$

für $0 \leq \tau \leq \Delta t$

$$Mi = \max(\int_0^{\Delta t} I(t) \cdot I2(t-\tau)dt)$$

für $0 \leq \tau \leq \Delta t$

Mp gibt somit den Maximalwert der Kreuzkorrelationsfunktion Kp($\tau$) an; dieser Maximalwert soll nachfolgend als Korrelationsmessgröße Mp für den Druck bezeichnet werden. Mi gibt den Maximalwert der Kreuzkorrelationsfunktion Ki($\tau$) an; dieser Maximalwert soll als Korrelationsmessgröße Mi für den Luftstrom bezeichnet werden.

Unterschreitet die Korrelationsmessgröße Mp für den Druck einen vorgegebenen Druck-Schwellenwert Mp,min oder die Korrelationsmessgröße Mi für den Luftstrom einen vorgegebenen Strom-Schwellenwert Mi,min, so wird das Alarmsignal A an einem Alarmsignalausgang Sa der Steuereinrichtung 10 abgegeben.

Da die Berechnung der Korrelationsmessgrößen Mp und Mi wegen der Integration über das gesamte Messfenster mit der Länge $\Delta t$ relativ lange dauert, können zum Erzeugen des Alarmsignals A statt der Korrelationsmessgrößen Mp und Mi auch Hilfskorrelationsmessgrößen Mp'(t) und Mi'(t) herangezogen werden:

$$Mp'(t) = |P(t) - P2(t)|$$

$$Mi'(t) = |I(t) - I2(t)|$$

Falls die Hilfskorrelationsmessgröße Mp' zu einem beliebigen Zeitpunkt innerhalb des Messfensters einen vorgegebenen Druckabweichungswert ΔPmax überschreitet, so wird das Alarmsignal A erzeugt. Das gleiche gilt, wenn die Hilfskorrelationsmessgröße Mi' einen vorgegebenen Stromabweichungswert ΔImax überschreitet.

Der Vorteil des Auslösens unter Heranziehung der Hilfskorrelationsmessgrößen Mp'(t) und Mi'(t) besteht dabei darin, dass das Alarmsignal A sofort erzeugt werden kann, wenn nur ein einziger Messwert eine zu große Abweichung vom zugeordneten Sollwert aufweist.

## Patentansprüche

1.  Einrichtung zum Erzeugen eines Alarmsignals (A), das eine Fehlfunktion einer druckluftgesteuerten Bremsanlage (8) eines Fahrzeugs angibt,

    -   mit einer Messeinrichtung (27), die den Druck und/oder den Luftstrom der Druckluft in der Bremsanlage unter Bildung von Druck- und/ oder Luftstrommesswerten (P(t), I(t)) misst,
    -   mit einer Speichereinrichtung (40) zum Abspeichern von betriebsartindividuellen Solldruck- und/oder Sollstromverläufen (P1(t), P2(t), P3(t), P4(t), I1(t), I2(t), I3(t), I4(t)) und

    mit einer mit der Messeinrichtung und der Speichereinrichtung verbundenen Steuereinrichtung (10), die die Messwerte (P(t), I(t)) der Messeinrichtung mit den Solldruck- und/oder Sollstromverläufen der Speichereinrichtung vergleicht und bei anormalen Druck- und/oder Luftstrommesswerten das Alarmsignal erzeugt,
    **dadurch gekennzeichnet, dass**

    -   die Steuereinrichtung derart ausgestaltet ist, dass sie

        -   aus dem zeitlichen Verlauf der Druck- und/ oder Luftstrommesswerte und der betriebsartindividuellen Solldruck- und/oder Sollstromverläufe eine Kreuzkorrelationsfunktion bildet,
        -   einen Maximalwert dieser Kreuzkorrelationsfunktion bestimmt,
        -   den Maximalwert als eine Korrelationsmessgröße behandelt und
        -   das Alarmsignal erzeugt, wenn die Korrelationsmessgröße einen vorgegebenen Schwellenwert unterschreitet.

2.  Einrichtung nach Anspruch 1,
    **dadurch gekennzeichnet, dass**

    -   die Steuereinrichtung derart ausgestaltet ist, dass sie bei einer zuvor an dem Fahrzeug durchgeführten Bremsprobe von der Messeinrichtung gemessene Druck- und/oder Luftstrommesswerte als fahrzeug- und betriebsartindividuelle Solldruck- und/oder Sollstromverläufe in der Speichereinrichtung abspeichert.

3.  Einrichtung nach Anspruch 2,
    **dadurch gekennzeichnet, dass**

    -   die Steuereinrichtung derart ausgestaltet ist, dass sie

        -   die fahrzeug- und betriebsartindividuellen Solldruck- und/oder Sollstromverläufe ermittelt und abspeichert für die Betriebsarten des Fahrzeugs:

            -   Betriebsart "Bremsen des Fahrzeugs ", in der das Fahrzeug gebremst wird,
            -   Betriebsart "Lösen der Bremsen", in der die Bremseinrichtungen der Bremsanlage nach Abschluss eines Bremsvorganges wieder gelöst werden und
            -   Betriebsart "Füllen der Bremsanlage", in der die Bremsanlage mit Druckluft gefüllt oder nachgefüllt werden, und

    -   die Steuereinrichtung darüber hinaus derart ausgestaltet ist, dass sie zum Erzeugen des Alarmsignals ausschließlich diejenigen fahrzeug- und betriebsartindividuellen Solldruck und/oder Sollstromverläufe heranzieht, die der jeweiligen Betriebsart des Fahrzeugs entsprechen.

4.  Verfahren zum Erzeugen eines Alarmsignals (A), das eine Fehlfunktion einer druckluftgesteuerten Bremsanlage (8) eines Fahrzeugs angibt, bei dem

    -   der Druck und/oder der Luftstrom in der Bremsanlage (8) des Fahrzeugs unter Bildung von Druck- und/oder Luftstrommesswerten (P(t), I(t)) gemessen wird,
    -   die gemessenen Druck- und/oder Luftstrommesswerte mit betriebsartindividuellen Solldruck- und/oder Sollstromverläufen (P1(t), P2(t), P3(t), P4(t), I1(t), I2(t), I3(t), I4(t)) verglichen werden und

- bei anormalen Druck- und/oder Luftstrommesswerten das Alarmsignal erzeugt wird,

**dadurch gekennzeichnet, dass**

- aus dem zeitlichen Verlauf der Druck- und/oder Luftstrommesswerte und der betriebsartindividuellen Solldruck- und/oder Sollstromverläufe eine Kreuzkorrelationsfunktion gebildet wird,
- ein Maximalwert dieser Kreuzkorrelationsfunktion bestimmt wird,
- der Maximalwert als eine Korrelationsmessgröße behandelt wird und
- das Alarmsignal (A) erzeugt wird, wenn die Korrelationsmessgröße einen vorgegebenen Schwellenwert unterschreitet.

5. Verfahren nach Anspruch 4,
   **dadurch gekennzeichnet, dass**

   - die bei einer zuvor an dem Fahrzeug durchgeführten Bremsprobe gemessenen Druck- und/oder Luftstrommesswerte als fahrzeug- und betriebsartindividuelle Solldruck- und/oder Sollstromverläufe behandelt werden.

6. Verfahren nach Anspruch 5,
   **dadurch gekennzeichnet, dass**

   - die fahrzeug- und betriebsartindividuellen Solldruck- und/oder Sollstromverläufe ermittelt und abspeichert werden für die Betriebsarten des Fahrzeugs:

     - Betriebsart "Bremsen des Fahrzeugs", in der das Fahrzeug gebremst wird,
     - Betriebsart "Lösen der Bremsen", in der die Bremseinrichtungen der Bremsanlage nach Abschluss eines Bremsvorganges wieder gelöst werden und
     - Betriebsart "Füllen der Bremsanlage", in der die Bremsanlage mit Druckluft gefüllt oder nachgefüllt wird, und

   - zum Erzeugen des Alarmsignals ausschließlich diejenigen fahrzeug- und betriebsartindividuellen Solldruck- und/oder Sollstromverläufe herangezogen werden, die der jeweiligen Betriebsart des Fahrzeugs entsprechen.

**Claims**

1. Device for generating an alarm signal (A) which specifies a malfunction of a compressed-air-controlled brake system (8) of a vehicle,

   - having a measuring device (27) which measures the pressure and/or the air flow of the compressed air in the brake system forming pressure and/or air flow measured values (P(t), I(t)),
   - having a memory device (40) for storing operating-mode-specific setpoint pressure and/or setpoint flow profiles (P1(t), P2(t), P3(t), P4(t), I1(t), I2(t), I3(t), I4(t)) and

   having a control device (10) which is connected to the measuring device and the memory device and which compares the measured values (P(t), I(t)) of the measuring device with the setpoint pressure and/or setpoint flow profiles of the memory device, and generates the alarm signal when there are abnormal pressure and/or air flow measured values, **characterized in that**

   - the control device is configured in such a way that it

     - forms a cross-correlation function from the time profile of the pressure and/or air flow measured values and the operating-mode-specific setpoint pressure and/or setpoint flow profiles,
     - determines a maximum value of this cross-correlation function,
     - treats the maximum value as a correlation measured variable and
     - generates the alarm signal if the correlation measured variable drops below a predefined threshold value.

2. Device according to Claim 1, **characterized in that**

   - the control device is configured in such a way that, when there is a braking test which is carried out in advance on the vehicle, it stores pressure and/or air flow measured values, measured by the measuring device, as vehicle-specific and operating-mode-specific setpoint pressure and/or setpoint flow profiles.

3. Device according to Claim 2, **characterized in that**

   - the control device is configured in such a way that it

     - determines and stores the vehicle-specific and operating-mode-specific setpoint pressure and/or setpoint flow profiles for the operating modes of the vehicle:

       - "braking of the vehicle" operating mode in which the vehicle is braked,
       - "releasing of the brakes" operating mode in which the brake devices of the brake system are released again after a braking operation has been terminated, and

- "filling of the brake system" operating mode in which the brake system is filled or refilled with compressed air, and

- the control device is also configured in such a way that, for the generation of the alarm signal, it uses exclusively those vehicle-specific and/or operating-mode-specific setpoint pressure and/or setpoint flow profiles which correspond to the respective operating mode of the vehicle.

4. Method for generating an alarm signal (A) which specifies a malfunction of a compressed-air-controlled brake system (8) of a vehicle in which

- the pressure and/or the air flow in the brake system (8) of the vehicle are measured forming pressure and/or air flow measured values (P(t), I(t)),
- the measured pressure and/or air flow measured values are compared with operating-mode-specific setpoint pressure and/or setpoint current profiles (P1(t), P2 (t) , P3(t), P4(t), I1(t), I2(t), I3(t), I4(t)), and
- the alarm signal is generated when there are abnormal pressure and/or air flow measured values, **characterized in that**
- a cross-correlation function is formed from the time profile of the pressure and/or air flow measured values and the operating-mode-specific setpoint pressure and/or setpoint flow profiles,
- a maximum value of this cross-correlation function is determined,
- the maximum value is treated as a correlation measured variable and
- the alarm signal (A) is generated if the correlation measured variable drops below a predefined threshold value.

5. Method according to Claim 4, **characterized in that**

- the pressure and/or air flow measured values which are measured when there is a braking test which is carried out in advance on the vehicle are treated as vehicle-specific and operating-mode-specific setpoint pressure and/or setpoint current profiles.

6. Method according to Claim 5, **characterized in that**

- the vehicle-specific and operating-mode-specific setpoint pressure and/or setpoint flow profiles are determined and stored for the operating modes of the vehicle:

- "braking of the vehicle" operating mode in which the vehicle is braked,
- "releasing of the brakes" operating mode in which the brake devices of the brake system are released again after a braking operation has been terminated, and
- "filling of the brake system" operating mode in which the brake system is filled or refilled with compressed air, and

- for the generation of the alarm signal, exclusively those vehicle-specific and/or operating-mode-specific setpoint pressure and/or setpoint flow profiles which correspond to the respective operating mode of the vehicle are used.

## Revendications

1. Dispositif pour produire un signal (A) d'alarme qui indique un dysfonctionnement d'une installation (8) de freinage à air comprimé d'un véhicule,

- comportant un équipement (27) de mesure, qui mesure la pression et/ou le débit d'air de l'air comprimé dans l'installation de freinage en formant des valeurs (P(t), I(t)) de mesure de pression et/ou de débit d'air,
- comportant un équipement (40) de sauvegarde pour mémoriser des allures (P1(t), P2(t), P3(t), P4(t), I1(t), I2(t), I3(t), I4(t)) de pression de consigne et/ou de débit de consigne spécifiques du mode opératoire,

et comportant un équipement (10) de commande, qui est relié à l'équipement de mesure et à l'équipement de sauvegarde et qui compare les valeurs (P(t), I(t)) de mesure de l'équipement de mesure aux allures de pression de consigne et/ou de débit de consigne de l'équipement de sauvegarde et produit le signal d'alarme en cas de valeurs anormales de mesure de pression et/ou de débit d'air, **caractérisé en ce que** l'équipement de commande est conçu de telle sorte que

- il forme une fonction de corrélation croisée à partir de l'allure dans le temps des valeurs de mesure de pression et/ou de débit d'air et des allures de pression de consigne et/ou de débit de consigne spécifiques du mode opératoire,
- il détermine une valeur maximale de cette fonction de corrélation croisée,
- il traite la valeur maximale comme paramètre de corrélation, et
- il produit le signal d'alarme si le paramètre de corrélation tombe en dessous d'une valeur de seuil prescrite.

2. Dispositif suivant la revendication 1, **caractérisé en ce que** l'équipement de commande est conçu de telle sorte qu'il mémorise dans l'équipement de sauvegarde, comme allures de pression de consigne et/ou de débit de consigne spécifiques du mode opératoire et du véhicule, des valeurs de mesure de pression et/ou de débit d'air mesurées par l'équipement de mesure lors d'un essai de freinage préalablement effectué sur le véhicule.

3. Dispositif suivant la revendication 2, **caractérisé en ce que** l'équipement de commande est conçu de telle sorte qu'il détermine et sauvegarde les allures de pression de consigne et/ou de débit de consigne spécifiques du mode opératoire et du véhicule pour les modes opératoires suivants du véhicule :

   - mode opératoire « freinage du véhicule », dans lequel le véhicule est freiné,
   - mode opératoire « desserrage des freins », dans lequel les équipements de freinage de l'installation de freinage sont à nouveau desserrés à l'achèvement d'un processus de freinage, et
   - mode opératoire « remplissage de l'installation de freinage », dans lequel l'installation de freinage est remplie ou réapprovisionnée en air comprimé,

   et l'équipement de commande est en outre conçu de telle sorte que, pour produire le signal d'alarme, il recourt exclusivement aux allures de pression de consigne et/ou de débit de consigne spécifiques du mode opératoire et du véhicule qui correspondent au mode opératoire respectif du véhicule.

4. Procédé pour produire un signal (A) d'alarme qui indique un dysfonctionnement d'une installation (8) de freinage à air comprimé d'un véhicule, suivant lequel

   - on mesure la pression et/ou le débit d'air dans l'installation (8) de freinage du véhicule en formant des valeurs (P(t), I(t)) de mesure de pression et/ou de débit d'air,
   - on compare les valeurs mesurées de pression et/ou de débit d'air à des allures (P1(t), P2(t), P3(t), P4(t), I1(t), I2(t), I3(t), I4(t)) de pression de consigne et/ou de débit de consigne spécifiques du mode opératoire, et
   - on produit le signal d'alarme en cas de valeurs anormales de mesure de pression et/ou de débit d'air,

   **caractérisé en ce que**

   - on forme une fonction de corrélation croisée à partir de l'allure dans le temps des valeurs de mesure de pression et/ou de débit d'air et des allures de pression de consigne et/ou de débit de consigne spécifiques du mode opératoire,
   - on détermine une valeur maximale de cette fonction de corrélation croisée,
   - on traite la valeur maximale comme paramètre de corrélation, et
   - on produit le signal (A) d'alarme si le paramètre de corrélation tombe en dessous d'une valeur de seuil prescrite.

5. Procédé suivant la revendication 4, **caractérisé en ce qu'**on traite, comme allures de pression de consigne et/ou de débit de consigne spécifiques du mode opératoire et du véhicule, des valeurs de mesure de pression et/ou de débit d'air mesurées lors d'un essai de freinage préalablement effectué sur le véhicule.

6. Procédé suivant la revendication 5, **caractérisé en ce que** on détermine et sauvegarde les allures de pression de consigne et/ou de débit de consigne spécifiques du mode opératoire et du véhicule pour les modes opératoires suivants du véhicule :

   - mode opératoire « freinage du véhicule », dans lequel le véhicule est freiné,
   - mode opératoire « desserrage des freins », dans lequel les équipements de freinage de l'installation de freinage sont à nouveau desserrés à l'achèvement d'un processus de freinage, et
   - mode opératoire « remplissage de l'installation de freinage », dans lequel l'installation de freinage est remplie ou réapprovisionnée en air comprimé,

   et, pour p roduire le signal d'alarme, o n recourt exclusivement aux allures de pression de consigne et/ou de débit de consigne spécifiques du mode opératoire et du véhicule qui correspondent au mode opératoire respectif du véhicule.

Fig.

EP 1 164 067 B1